# EUROPEAN PATENT APPLICATION

(11) **EP 4 645 578 A1**
(43) Date of publication of application: **05.11.2025**
(21) Application number: 23909956.7
(22) Date of filing: 01.12.2023
(51) Int. Cl.: H01M 50/531

(54) **ELECTRODE ASSEMBLY, BATTERY, AND ELECTRIC DEVICE**

(30) Priority: 31.12.2022 CN 202211743273
(71) Applicant: Ningde Amperex Technology Limited, Ningde, Fujian 352100 (CN)
(72) Inventor: JIN, Fudong, Ningde, Fujian 352100 (CN)
(74) Representative: Icosa
(86) International application number: PCT/CN2023/135985
(87) International publication number: WO 2024/140026

(57) **Abstract**

An electrode assembly, a battery, and an electric device are provided. The electrode assembly includes a first electrode plate, a separator, and a second electrode plate disposed in sequence. The electrode assembly further includes a tab, a first insulating layer, and a second insulating layer. The first electrode plate includes a first current collector and first active material layers applied on two sides of the first current collector. The first active material layer is provided with a tab groove, and the tab groove is provided with a tab. At least one surface of the first active material layer is provided with a thinned region in communication with the tab groove. The thinned region includes a first depression apart from the tab groove in the first direction, and a second depression provided between the first depression and the tab groove. The first insulating layer is provided in the second depression. The second insulating layer is connected to a side of the second electrode plate facing the first depression, and a projection of the second insulating layer in the first direction is located in the first depression. The electrode assembly can improve energy density of the battery and reduce the risk of lithium precipitation.

## Description

### TECHNICAL FIELD

This application relates to the field of energy storage technologies, and in particular, to an electrode assembly, a battery, and an electric device.

### BACKGROUND

In an existing battery structure, a tab and an electrode plate are both provided with protruding adhesive paper. After winding, overlapping adhesive paper affects flatness of the battery, and lithium precipitation is likely to occur at a joint position between the adhesive paper and an active material on the electrode plate during charging and discharging, affecting cycling of the battery. In addition, the protruding adhesive paper affects energy density of the battery.

### SUMMARY

In view of the foregoing issues, it is necessary to provide an electrode assembly capable of resolving the foregoing problems.

An embodiment of this application provides an electrode assembly, where the electrode assembly includes a first electrode plate, a separator, and a second electrode plate disposed in sequence. The electrode assembly further includes a tab, a first insulating layer, and a second insulating layer. The first electrode plate includes a first current collector and first active material layers applied on two sides of the first current collector in a first direction, where the first direction is a thickness direction of the first current collector. The first active material layer is provided with a tab groove exposing the first current collector, and the tab groove is provided with a tab connected to the first current collector. At least one surface of the first active material layer is provided with a thinned region in communication with the tab groove. The thinned region includes a first depression apart from the tab groove in the first direction, and a second depression provided between the first depression and the tab groove. A second direction is defined as a width direction of the first current collector. When viewed in the second direction, a bottom wall of the second depression is divided into two first step surfaces apart from each other by the tab groove, and a bottom wall of the first depression is divided into two second step surfaces apart from each other by the second depression. The first insulating layer is provided in the second depression, and two ends of the first insulating layer are respectively located on the two first step surfaces. The second insulating layer is connected to a side of the second electrode plate facing the first depression, and a projection of the second insulating layer in the first direction is located in the first depression. In the first direction, relationships between depth T1 of the first depression, depth T2 of the second depression, thickness L1 of the first insulating layer, and thickness L2 of the second insulating layer satisfy T1≤L2, T2≥L1, T1≤5 µm, and 5 µm≤L2≤20 µm.

In the electrode assembly, the first insulating layer is accommodated in the second depression, and the second insulating layer is at least partially accommodated in the first depression, so that the flatness of the electrode assembly is improved, and thus energy density of a battery provided with such electrode assembly is increased. The depth T1 of the first depression is less than or equal to 5 µm, so that a thickness difference between portions of the first active material layer on two ends of the second insulating layer and an active material layer on the corresponding second electrode plate is limited, thereby reducing the risk of lithium precipitation.

In some embodiments of this application, 1 µm≤T1≤3 µm, so that the thickness difference between the portions of the first active material layer on two ends of the second insulating layer and the active material layer on the corresponding second electrode plate is further limited, thereby reducing the risk of lithium precipitation.

An embodiment of this application further provides an electrode assembly, where the electrode assembly includes a first electrode plate, a separator, and a second electrode plate disposed in sequence. The electrode assembly further includes a tab, a first insulating layer, and a second insulating layer. The first electrode plate includes a first current collector and first active material layers applied on two sides of the first current collector in a first direction, where the first direction is a thickness direction of the first current collector. The first active material layer is provided with a tab groove exposing the first current collector, and the tab groove is provided with a tab connected to the first current collector. At least one surface of the first active material layer is provided with a thinned region in communication with the tab groove. The thinned region includes a first depression apart from the tab groove in the first direction, and a second depression provided between the first depression and the tab groove. A second direction is defined as a width direction of the first current collector. When viewed in the second direction, a bottom wall of the second depression is divided into two first step surfaces apart from each other by the tab groove, and a bottom wall of the first depression is divided into two second step surfaces apart from each other by the second depression. The first insulating layer is provided in the second depression, and two ends of the first insulating layer are respectively located on the two first step surfaces. The second insulating layer is connected to a side of the second electrode plate facing the first depression, and a projection of the second insulating layer in the first direction is located in the first depression. When viewed in the second direction, the first active material layer is further provided with flat coated regions located on two sides of the thinned region, and the electrode assembly further includes two third insulating layers connected to two ends of the second insulating layer, a projection of each of the third insulating layers in the first direction extending from the first depression to the flat coated region.

In the electrode assembly, the first insulating layer is accommodated in the second depression, and the second insulating layer is at least partially accommodated in the first depression, so that the flatness of the electrode assembly is improved, and thus energy density of a battery provided with such electrode assembly is increased. With the third insulating layer, impedance of a cathode is increased, so as to reduce the risk of lithium precipitation caused by a significant thickness difference between portions of the first active material layer on two ends of the second insulating layer and an active material layer on the corresponding second electrode plate.

In some embodiments of this application, in the first direction, relationships between depth T1 of the first depression, depth T2 of the second depression, thickness L1 of the first insulating layer, and thickness L2 of the second insulating layer satisfy T1≥L2, T2≥L1, and T1>5 µm, so that the second insulating layer is entirely embedded into the first depression and the first insulating layer is entirely accommodated in the second depression, thereby eliminating influence of the second insulating layer and the first insulating layer on the flatness of the electrode assembly.

In some embodiments of this application, the third insulating layer is formed by applying polyvinyl alcohol, polyacrylic acid, or a mixture of both onto the second electrode plate.

In some embodiments of this application, in the first direction, thickness L3 of the third insulating layer satisfies 2 µm≤L3≤5 µm, thereby reducing influence of the third insulating layer on the flatness of the electrode assembly while maintaining stable insulation performance.

In some embodiments of this application, a third direction is defined as a length direction of the first current collector, and in the third direction, length D3 of the third insulating layer satisfies 4 mm≤D3≤8 mm, so as to allow a projection of the third insulating layer in the first direction to extend from the first depression to the flat coated region.

In some embodiments of this application, in the third direction, relationships between length W1 of the first depression, length W2 of the second depression, length D1 of the first insulating layer, and length D2 of the second insulating layer satisfy W1≥D2, W2≥D1, W1>W2, and D2>D1, so as to allow the first insulating layer to be accommodated in the second depression in the third direction and allow the second insulating layer to be accommodated in the first depression in the third direction.

In some embodiments of this application, the first active material layer includes a first surface and a second surface opposite each other in the first direction. The thinned region includes a first thinned region and a second thinned region, where the first thinned region is arranged on the first surface, and the second thinned region is arranged on the second surface. In the first direction, a projection of the first depression in the first thinned region overlaps with a projection of the first depression in the second thinned region, and a projection of the second depression in the first thinned region overlaps with a projection of the second depression in the second thinned region. The first thinned region and the second thinned region fit with each other to reduce influence of the first insulating layer and the second insulating layer on the flatness of the electrode assembly, thereby reducing the risk of lithium precipitation.

In some embodiments of this application, the first current collector located in the tab groove is provided with a third depression recessed along the first direction, and the tab is accommodated in the third depression. The third depression is used to reduce influence of the tab on thickness of the first electrode plate 10 in the first direction.

In some embodiments of this application, the first active material layer includes a first surface and a second surface opposite each other in the first direction. The first active material layer is provided with one thinned region, and the thinned region is arranged on one of the first surface and the second surface. The electrode assembly further includes a fourth insulating layer and a fifth insulating layer. The fourth insulating layer is connected to the other one of the first surface and the second surface. The fourth insulating layer covers an end of the tab groove facing away from the thinned region. The fifth insulating layer is connected to a side of the second electrode plate facing the fourth insulating layer. In the first direction, a projection of the first insulating layer overlaps with a projection of the fourth insulating layer, and a projection of the second insulating layer overlaps with a projection of the fifth insulating layer.

In some embodiments of this application, in the first direction, relationships between depth T1 of the first depression, depth T2 of the second depression, thickness L1 of the first insulating layer, thickness L2 of the second insulating layer, thickness L4 of the fourth insulating layer, and thickness L5 of the fifth insulating layer satisfy L1+L4≤T2 and L2+L5≤T1. The first depression can eliminate influence of the second insulating layer and the fifth insulating layer on the flatness of the electrode assembly, and the second depression can eliminate influence of the first insulating layer and the fourth insulating layer on the flatness of the electrode assembly, thereby reducing the risk of lithium precipitation.

An embodiment of this application further provides a battery including the electrode assembly according to any one of the foregoing embodiments.

An embodiment of this application further provides an electric device including the battery according to any one of the foregoing embodiments.

In the battery and electric device in this application, the first insulating layer is accommodated in the second depression, and the second insulating layer is at least partially accommodated in the first depression, so that the flatness of the electrode assembly is improved, and thus energy density of a battery provided with such electrode assembly is increased. In a first aspect, the depth T1 of the first depression is less than or equal to 5 µm, so that a thickness difference between portions of the first active material layer on two ends of the second insulating layer and an active material layer on the corresponding second electrode plate is limited, thereby reducing the risk of lithium precipitation. In a second aspect, with the third insulating layer, impedance of a cathode is increased, so as to reduce the risk of lithium precipitation caused by a significant thickness difference between portions of the first active material layers on two ends of the second insulating layer and an active material layer on the corresponding second electrode plate.

### BRIEF DESCRIPTION OF DRAWINGS

FIG. 1 is a first schematic structural diagram of an electrode assembly according to an embodiment of this application.
FIG. 2 is a schematic diagram of size of an electrode assembly according to an embodiment of this application.
FIG. 3 is a second schematic structural diagram of an electrode assembly according to an embodiment of this application.
FIG. 4 is a comparison diagram of data of thickness swelling during cycling of a battery according to an embodiment of this application.
FIG. 5 is a third schematic structural diagram of an electrode assembly according to an embodiment of this application.
FIG. 6 is a schematic structural diagram of a battery and an electric device according to an embodiment of this application.

**Reference signs of main components:**

| | |
|---|---|
| electrode assembly | 100, 100a, 100b, and 100c |
| battery | 200 |
| electric device | 300 |
| first electrode plate | 10 |
| first current collector | 11 |
| third depression | 111 |
| first active material layer | 12 |
| thinned region | 12a |
| first depression | 121 |
| second step surface | 121a |
| second depression | 122 |
| first step surface | 122a |
| first surface | 123 |
| second surface | 124 |
| flat coated region | 12b |
| first thinned region | 12c |
| second thinned region | 12d |
| tab groove | 13 |
| separator | 20 |
| first portion | 21 |
| second electrode plate | 30 |
| second current collector | 31 |
| second active material layer | 32 |
| tab | 40 |
| first insulating layer | 51 |
| second insulating layer | 52 |
| third insulating layer | 53 |
| fourth insulating layer | 54 |
| fifth insulating layer | 55 |
| first direction | Z |
| second direction | X |
| third direction | Y |

This application is further described with reference to the accompanying drawings in the following specific embodiments.

### DESCRIPTION OF EMBODIMENTS

The following describes the technical solutions in some embodiments of this application with reference to the accompanying drawings in some embodiments of this application. Apparently, the described embodiments are merely some rather than all of the embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

It should be understood that in consideration of the factors of actual processing tolerances, in the technical solutions of this application, when two components are parallel/perpendicular to each other, they are disposed in a same direction, a certain included angle may be present between the two components, a tolerance of 0 to ±10% is allowed between the two components, and the tolerance between the two components is greater than, equal to, or less than 0 to ±10%.

The following further describes some embodiments of this application with reference to the accompanying drawings.

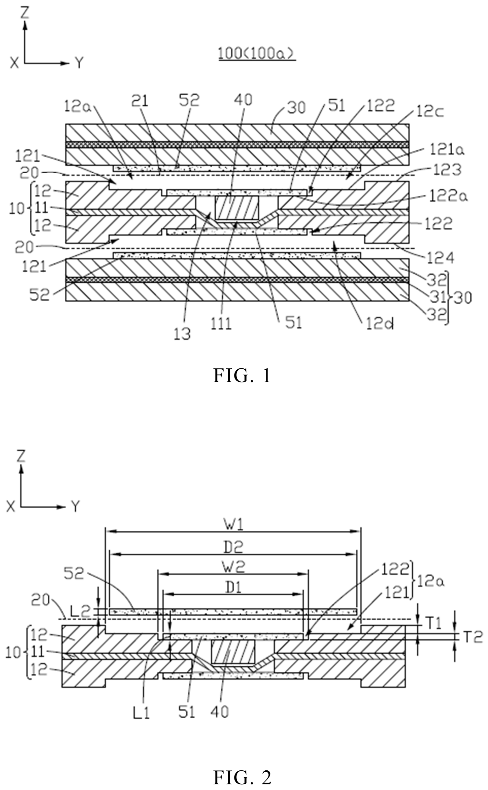

Referring to FIG. 1, an embodiment of this application provides an electrode assembly 100, where the electrode assembly 100 includes a first electrode plate 10, a separator 20, and a second electrode plate 30 disposed in sequence. Optionally, the first electrode plate 10, the separator 20, and the second electrode plate 30 are wound or stacked.

The electrode assembly 100 further includes a tab 40, a first insulating layer 51, and a second insulating layer 52. The first electrode plate 10 includes a first current collector 11 and first active material layers 12 applied on two sides of the first current collector 11 in a first direction Z, where the first direction Z is a thickness direction of the first current collector 11. The first active material layer 12 is provided with a tab groove 13 exposing the first current collector 11, and the tab groove 13 is provided with a tab 40 connected to the first current collector 11. The first active material layer 12 can allow deintercalation and intercalation of lithium ions. The first current collector 11 leads a current generated by an electrochemical reaction to an external circuit through the tab 40, thereby implementing a process of converting chemical energy into electrical energy.

A second direction X is defined as a width direction of the first current collector 11, and a third direction Y is defined as a length direction of the first current collector 11, where the length direction and width direction of the first current collector 11 respectively refer to two dimensions of the surface of the first current collector 11. The length direction is a primary dimension direction (that is, a direction with a larger size), and the width direction is a secondary dimension direction (that is, a direction with a smaller size). Typically, the length direction is consistent with a coating direction of each material layer (for example, the first active material layer 12) during processing of the first electrode plate 10, and is also consistent with a winding direction of the first electrode plate 10, the separator 20, and the second electrode plate 30. The width direction is perpendicular to the length direction.

At least one surface of the first active material layer 12 is provided with a thinned region 12a in communication with the tab groove 13. The thinned region 12a includes a first depression 121 apart from the tab groove 13 in the first direction Z, and a second depression 122 provided between the first depression 121 and the tab groove 13. When viewed in the second direction X, a bottom wall of the second depression 122 is divided into two first step surfaces 122a apart from each other by the tab groove 13, and a bottom wall of the first depression 121 is divided into two second step surfaces 121a apart from each other by the second depression 122.

The first insulating layer 51 is provided in the second depression 122, two ends of the first insulating layer 51 are respectively located on the two first step surfaces 122a, and the first insulating layer 51 is used to separate the tab 40 from the second electrode plate 30.

The second insulating layer 52 is connected to a side of the second electrode plate 30 facing the first depression 121, a projection of the second insulating layer 52 in the first direction Z is located in the first depression 121, and the second insulating layer 52 is used to further separate the tab 40 from the second electrode plate 30. Specifically, the separator 20 includes a first portion 21 close to the second insulating layer 52, and in the first direction Z, a projection of the second insulating layer 52 overlaps with a projection of the first portion 21. In the first direction Z, the second insulating layer 52 is at least partially embedded into the first depression 121, the first portion 21 is embedded into the first depression 121 under the driving of the second insulating layer 52, and two ends of the projection of the second insulating layer 52 in the first direction Z are respectively located on the two second step surfaces 121a.

The first insulating layer 51 is accommodated in the second depression 122, and the second insulating layer 52 is at least partially accommodated in the first depression 121, so that the flatness of the electrode assembly 100 is improved, and thus energy density of a battery provided with such electrode assembly 100 is increased.

Referring to FIG. 2, in a third direction Y, relationships between length W1 of the first depression, length W2 of the second depression, length D1 of the first insulating layer, and length D2 of the second insulating layer satisfy W1≥D2, W2≥D1, W1>W2, and D2>D1, so as to allow the first insulating layer 51 to be accommodated in the second depression 122 in the third direction Y and allow the second insulating layer 52 to be accommodated in the first depression 121 in the third direction Y.

Referring to FIG. 1 and FIG. 2, in some embodiments, in the first direction Z, relationships between depth T1 of the first depression 121, depth T2 of the second depression 122, thickness L1 of the first insulating layer 51, and thickness L2 of the second insulating layer 52 satisfy T1≤L2, T2≥L1, T1≤5 µm, and 5 µm≤L2≤20 µm. Specifically, in the first direction Z, the second insulating layer 52 is at least partially embedded into the first depression 121 to eliminate influence of at least a portion of the second insulating layer 52 on the flatness of the electrode assembly 100. Optionally, when T1=L2, the second insulating layer 52 is entirely embedded into the first depression 121, and when T1<L2, the second insulating layer 52 is partially embedded into the first depression 121. The first insulating layer 51 is entirely embedded into the second depression 122 to eliminate influence of the first insulating layer 51 on the flatness of the electrode assembly 100. T1≤5 µm, so that a thickness difference between portions of the first active material layer 12 on two ends of the second insulating layer 52 and an active material layer on the corresponding second electrode plate 30 is limited, thereby reducing the risk of lithium precipitation.

It can be understood that the second electrode plate 30 includes a second current collector 31 and second active material layers 32 applied on two sides of the second current collector 31. In the first direction Z, thickness of the second active material layer 32 is the same as thickness of a portion of the first active material layer 12 provided with no thinned region 12a.

Optionally, T1 may be 1 µm, 2 µm, 3 µm, 4 µm, 5 µm, or any one of other values within the range of T1≤5 µm.

Further, 1 µm≤T1≤3 µm, so that the thickness difference between the portions of the first active material layer 12 on two ends of the second insulating layer 52 and the active material layer on the corresponding second electrode plate 30 is further limited, thereby reducing the risk of lithium precipitation.

Further, T1 is 1 µm, so that the thickness difference between the portions of the first active material layer 12 on two ends of the second insulating layer 52 and the active material layer on the corresponding second electrode plate 30 is further limited, thereby reducing the risk of lithium precipitation.

Optionally, L2 may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any one of other values within the range of 5 µm≤L2≤20 µm.

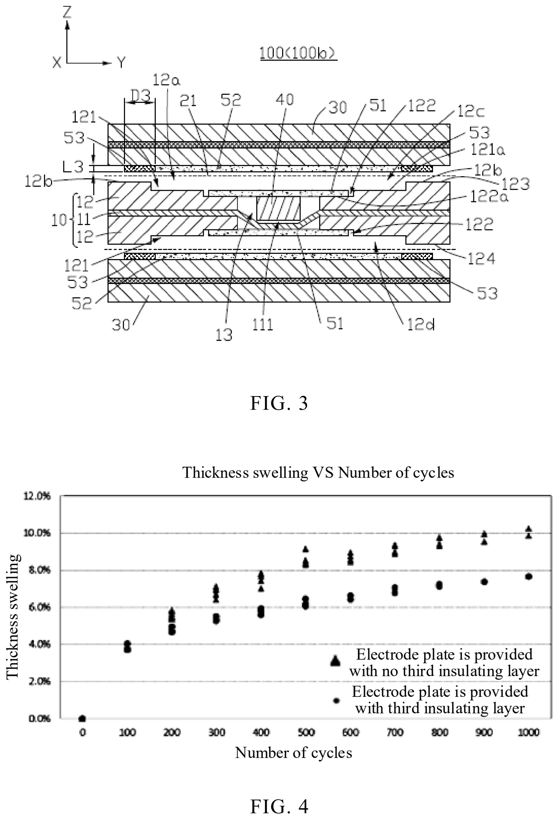

Referring to FIG. 3, in some embodiments, in the first direction Z, relationships between depth T1 of the first depression 121, depth T2 of the second depression 122, thickness L1 of the first insulating layer 51, and thickness L2 of the second insulating layer 52 satisfy T1≥L2, T2≥L1, and T1>5 µm. Specifically, in the first direction Z, the second insulating layer 52 is entirely embedded into the first depression 121 to eliminate influence of the second insulating layer 52 on the flatness of the electrode assembly 100. The first insulating layer 51 is entirely accommodated in the second depression 122 to eliminate influence of the first insulating layer 51 on the flatness of the electrode assembly 100.

When viewed in the second direction X, the first active material layer 12 is further provided with flat coated regions 12b located on two sides of the thinned region 12a. The electrode assembly 100 further includes two third insulating layers 53 connected to two ends of the second insulating layer 52, where a projection of each of the third insulating layers 53 in the first direction Z extends from the first depression 121 to the flat coated region 12b. Specifically, each third insulating layer 53 extends from an end portion of the second insulating layer 52 to the outside of the first depression 121, and the third insulating layers 53 are used to separate portions of the first active material layer 12 on the two ends of the second insulating layer 52 from an active material layer on the corresponding second electrode plate 30, so as to reduce the risk of lithium precipitation caused by a significant thickness difference between the portions of the first active material layer 12 on two ends of the second insulating layer 52 and the active material layer on the corresponding second electrode plate 30.

It can be understood that when T1≤5 µm, two third insulating layers 53 can be disposed on two ends of the second insulating layer 52 to further reduce the risk of lithium precipitation.

Referring to FIG. 4, optionally, the third insulating layer 53 is formed by applying polyvinyl alcohol (PVA), polyacrylic acid (PAA), or a mixture of both onto the second electrode plate 30. After gluing, impedance of a cathode at a glued position can be increased, and an amount of lithium ions deintercalated at a corresponding position is reduced, thereby reducing the risk of lithium precipitation at the glued position.

In some embodiments, in the first direction Z, thickness L3 of the third insulating layer 53 satisfies 2 µm≤L3≤5 µm, so as to reduce influence of the third insulating layer 53 on the flatness of the electrode assembly 100 while maintaining stable insulation performance.

Optionally, L3 may be 2 µm, 3 µm, 4 µm, 5 µm, or any one of other values within the range of 2 µm≤L3≤5 µm.

In some embodiments, in the third direction Y, length D3 of the third insulating layer 53 satisfies 4 mm≤D3≤8 mm, so as to allow a projection of the third insulating layer 53 in the first direction Z to extend from the first depression 121 to the flat coated region 12b.

Optionally, L3 may be 4 mm, 5 mm, 6 mm, 7 mm, 8 mm, or any one of other values within the range of 4 mm≤D3≤8 mm.

In some embodiments, the first active material layers 12 include a first surface 123 and a second surface 124 opposite each other in the first direction Z, where the first surface 123 and the second surface 124 are respectively located on two sides of the first current collector 11. The thinned regions 12a include a first thinned region 12c and a second thinned region 12d, where the first thinned region 12c is arranged on the first surface 123, and the second thinned region 12d is arranged on the second surface 124.

The first thinned region 12c and the second thinned region 12d are each provided with a first depression 121 and a second depression 122. In the first direction Z, a projection of the first depression 121 in the first thinned region 12c overlaps with a projection of the first depression 121 in the second thinned region 12d, and a projection of the second depression 122 in the first thinned region 12c overlaps with a projection of the second depression 122 in the second thinned region 12d. Correspondingly, the first thinned region 12c and the second thinned region 12d are each provided with a first insulating layer 51 and a second insulating layer 52. The first thinned region 12c and the second thinned region 12d fit with each other to reduce influence of the first insulating layer 51 and the second insulating layer 52 on the flatness of the electrode assembly 100, thereby reducing the risk of lithium precipitation.

It can be understood that the first thinned region 12c and the second thinned region 12d are each optionally provided with third insulating layers 53 based on depth T1 of their respective first depression 121. Specifically, when the depths T1 of the first depressions 121 of the first thinned region 12c and the second thinned region 12d are less than or equal to 5 µm, the first thinned region 12c and the second thinned region 12d are both provided with no third insulating layer 53. When the depths T1 of the first depressions 121 of the first thinned region 12c and the second thinned region 12d are greater than 5 µm, the first thinned region 12c and the second thinned region 12d are each provided with third insulating layers 53, and projections, in the first direction Z, of two third insulating layers 53 on one side of the tab 40 in the third direction Y overlap. When the depth T1 of the first depression 121 of the first thinned region 12c is less than or equal to 5 µm and the depth T1 of the first depression 121 of the second thinned region 12d is greater than 5 µm, the first thinned region 12c is provided with no third insulating layer 53, and the second thinned region 12d is provided with third insulating layers 53. When the depth T1 of the first depression 121 of the first thinned region 12c is greater than 5 µm and the depth T1 of the first depression 121 of the second thinned region 12d is less than or equal to 5 µm, the first thinned region 12c is provided with third insulating layers 53, and the second thinned region 12d is provided with no third insulating layer 53.

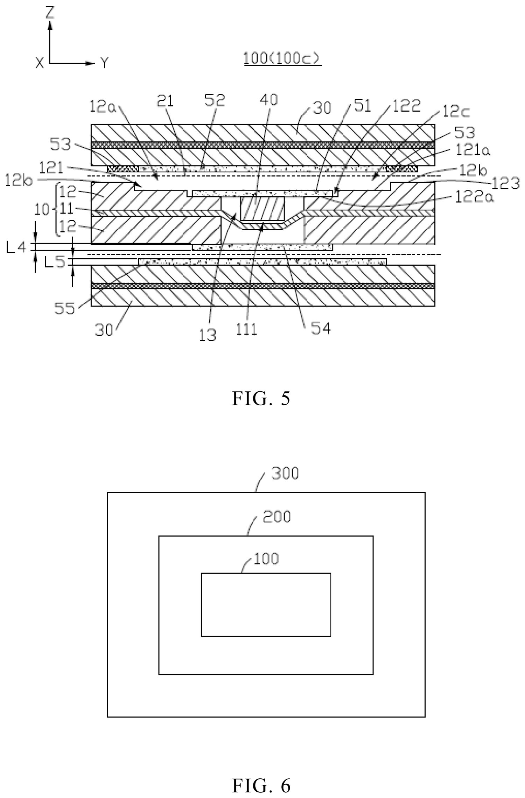

Referring to FIG. 5, in some embodiments, the first active material layers 12 are provided with one thinned region 12a, and the thinned region 12a is arranged on one of the first surface 123 and the second surface 124. The electrode assembly 100 further includes a fourth insulating layer 54 and a fifth insulating layer 55. The fourth insulating layer 54 is connected to the other one of the first surface 123 and the second surface 124. The fourth insulating layer 54 covers an end of the tab groove 13 facing away from the thinned region 12a. The fifth insulating layer 55 is connected to a side of the second electrode plate 30 facing the fourth insulating layer 54. The fourth insulating layer 54 and the fifth insulating layer 55 are used to separate the tab 40 from the second electrode plate 30 on a side facing away from the thinned region 12a.

In the first direction Z, a projection of the first insulating layer 51 overlaps with a projection of the fourth insulating layer 54, and a projection of the second insulating layer 52 overlaps with a projection of the fifth insulating layer 55, so that the tab 40 has substantially same insulation area on two sides, thereby improving insulation stability.

In the first direction Z, relationships between the depth T1 of the first depression 121, the depth T2 of the second depression 122, the thickness L1 of the first insulating layer 51, the thickness L2 of the second insulating layer 52, thickness L4 of the fourth insulating layer 54, and thickness L5 of the fifth insulating layer 55 satisfy L1+L4≤T2 and L2+L5≤T1. Specifically, in the first direction Z, the second insulating layer 52 is entirely embedded into the first depression 121, the first insulating layer 51 is entirely accommodated in the second depression 122, the fourth insulating layer 54 and the fifth insulating layer 55 can protrude toward the thinned region 12a, the first depression 121 can eliminate influence of the second insulating layer 52 and the fifth insulating layer 55 on the flatness of the electrode assembly 100, and the second depression 122 can eliminate influence of the first insulating layer 51 and the fourth insulating layer 54 on the flatness of the electrode assembly 100, thereby reducing the risk of lithium precipitation.

In some embodiments, the first current collector 11 located in the tab groove 13 is provided with a third depression 111 recessed along the first direction Z. The third depression 111 is used to reduce influence of the tab 40 on thickness of the first electrode plate 10 in the first direction Z.

Referring to FIG. 6, an embodiment of this application further provides a battery 200, where the battery 200 includes the electrode assembly 100 according to any one of the foregoing embodiments.

Referring to FIG. 6, an embodiment of this application further provides an electric device 300, where the electric device 300 includes the battery 200 according to any one of the foregoing embodiments. The electric device 300 may be an electronic device such as a mobile phone or a tablet computer, or a mobile device such as a drone or an electric vehicle.

In conclusion, in the foregoing electrode assembly 100, battery 200, and electric device 300, the first insulating layer 51 is accommodated in the second depression 122, and the second insulating layer 52 is at least partially accommodated in the first depression 121, so that the flatness of the electrode assembly 100 is improved, and thus energy density of the battery provided with the electrode assembly 100 is increased. In a first aspect, the depth T1 of the first depression 121 is less than or equal to 5 µm, so that a thickness difference between portions of the first active material layer 12 on two ends of the second insulating layer 52 and an active material layer on the corresponding second electrode plate 30 is limited, thereby reducing the risk of lithium precipitation. In a second aspect, with the third insulating layer 53, impedance of a cathode is increased, so as to reduce the risk of lithium precipitation caused by a significant thickness difference between portions of the first active material layer 12 on two ends of the second insulating layer 52 and an active material layer on the corresponding second electrode plate 30.

The following further describes Embodiments 1 to 3 of this application with reference to the accompanying drawings.

### Embodiment 1

Referring to FIG. 1, an embodiment of this application provides an electrode assembly 100a. Thinned regions 12a include a first thinned region 12c and a second thinned region 12d, where the first thinned region 12c is arranged on a first surface 123, and the second thinned region 12d is arranged on a second surface 124. The first thinned region 12c and the second thinned region 12d are each provided with a first depression 121 and a second depression 122. In a first direction Z, a projection of the first depression 121 in the first thinned region 12c overlaps with a projection of the first depression 121 in the second thinned region 12d, and a projection of the second depression 122 in the first thinned region 12c overlaps with a projection of the second depression 122 in the second thinned region 12d. Correspondingly, the first thinned region 12c and the second thinned region 12d are each provided with a first insulating layer 51 and a second insulating layer 52. Depths T1 of the first depressions 121 of the first thinned region 12c and the second thinned region 12d are less than or equal to 5 µm, and the first thinned region 12c and the second thinned region 12d are both provided with no third insulating layer 53.

In a third direction Y, length of a tab groove 13 is 9 mm, and width of a tab 40 is 6 mm.

In the first thinned region 12c, length D1 of the first insulating layer 51 is 11 mm, thickness L1 of the first insulating layer 51 is 16 µm, length W2 of the second depression 122 is 13 mm, depth T2 of the second depression 122 is 18 µm, length D2 of the second insulating layer 52 is 20 mm, thickness L2 of the second insulating layer 52 is 10 µm, length W1 of the first depression 121 is 26 mm, and depth T1 of the first depression 121 is 5 µm.

In the second thinned region 12d, length D1 of the first insulating layer 51 is 11 mm, thickness L1 of the first insulating layer 51 is 16 µm, length W2 of the second depression 122 is 13 mm, depth T2 of the second depression 122 is 18 µm, length D2 of the second insulating layer 52 is 20 mm, thickness L2 of the second insulating layer 52 is 10 µm, length W1 of the first depression 121 is 26 mm, and depth T1 of the first depression 121 is 5 µm.

In the foregoing electrode assembly 100a, in the first direction Z, the second insulating layer 52 is embedded into the first depression 121 from the outside of the first depression 121 to eliminate influence of a portion of the second insulating layer 52 on the flatness of the electrode assembly 100. The first insulating layer 51 is entirely accommodated in the second depression 122 to eliminate influence of the first insulating layer 51 on the flatness of the electrode assembly 100. T1≤5 µm, so that a thickness difference between portions of the first active material layer 12 on two ends of the second insulating layer 52 and an active material layer on a corresponding second electrode plate 30 is limited, thereby reducing the risk of lithium precipitation.

### Embodiment 2

Referring to FIG. 4, an embodiment of this application provides an electrode assembly 100b. Thinned regions 12a include a first thinned region 12c and a second thinned region 12d, where the first thinned region 12c is arranged on a first surface 123, and the second thinned region 12d is arranged on a second surface 124. The first thinned region 12c and the second thinned region 12d are each provided with a first depression 121 and a second depression 122. In a first direction Z, a projection of the first depression 121 in the first thinned region 12c overlaps with a projection of the first depression 121 in the second thinned region 12d, and a projection of the second depression 122 in the first thinned region 12c overlaps with a projection of the second depression 122 in the second thinned region 12d. Correspondingly, the first thinned region 12c and the second thinned region 12d are each provided with a first insulating layer 51 and a second insulating layer 52. Depths T1 of the first depressions 121 of the first thinned region 12c and the second thinned region 12d are greater than 5 µm, and the first thinned region 12c and the second thinned region 12d are each provided with third insulating layers 53.

In a third direction Y, length of a tab groove 13 is 9 mm, and width of a tab 40 is 6 mm.

In the first thinned region 12c, length D1 of the first insulating layer 51 is 11 mm, thickness L1 of the first insulating layer 51 is 16 µm, length W2 of the second depression 122 is 13 mm, depth T2 of the second depression 122 is 18 µm, length D2 of the second insulating layer 52 is 20 mm, thickness L2 of the second insulating layer 52 is 10 µm, length W1 of the first depression 121 is 26 mm, and depth T1 of the first depression 121 is 12 µm. Third insulation layer 53

In the second thinned region 12d, length D1 of the first insulating layer 51 is 11 mm, thickness L1 of the first insulating layer 51 is 16 µm, length W2 of the second depression 122 is 13 mm, depth T2 of the second depression 122 is 18 µm, length D2 of the second insulating layer 52 is 20 mm, thickness L2 of the second insulating layer 52 is 10 µm, length W1 of the first depression 121 is 26 mm, and depth T1 of the first depression 121 is 12 µm.

Thickness L3 of the third insulating layer 53 satisfies 2 µm≤L3≤5 µm, and length D3 of the third insulating layer 53 satisfies 4 mm≤D3≤8 mm.

In the foregoing electrode assembly 100b, in the first direction Z, the second insulating layer 52 is entirely embedded into the first depression 121 to eliminate influence of the second insulating layer 52 on the flatness of the electrode assembly 100. The first insulating layer 51 is entirely accommodated in the second depression 122 to eliminate influence of the first insulating layer 51 on the flatness of the electrode assembly 100. With the third insulating layer 53, impedance of a cathode is increased, so as to reduce the risk of lithium precipitation caused by a significant thickness difference between portions of the first active material layer 12 on two ends of the second insulating layer 52 and an active material layer on a corresponding second electrode plate 30.

### Embodiment 3

Referring to FIG. 5, an embodiment of this application provides an electrode assembly 100c. First active material layers 12 are provided with one thinned region 12a, and the thinned region 12a is arranged a first surface 123. A first thinned region 12c is provided with a first depression 121 and a second depression 122. Correspondingly, the first thinned region 12c and a second thinned region 12d are each provided with a first insulating layer 51 and a second insulating layer 52. The electrode assembly 100 further includes a fourth insulating layer 54 and a fifth insulating layer 55. The fourth insulating layer 54 is connected to a second surface 124 and covers an end of a tab groove 13 facing away from the thinned region 12a. The fifth insulating layer 55 is connected to a side of a second electrode plate facing the fourth insulating layer 54.

In a third direction Y, length of the tab groove 13 is 9 mm, and width of a tab 40 is 6 mm.

In the thinned region 12a, length D1 of the first insulating layer 51 is 11 mm, thickness L1 of the first insulating layer 51 is 16 µm, length W2 of the second depression 122 is 13 mm, depth T2 of the second depression 122 is 36 µm, length D2 of the second insulating layer 52 is 20 mm, thickness L2 of the second insulating layer 52 is 10 µm, length W1 of the first depression 121 is 26 mm, and depth T1 of the first depression 121 is 24 µm.

In the third direction Y, length of the fourth insulating layer 54 is 11 mm, and length of the fifth insulating layer 55 is 20 mm. In a first direction Z, thickness L4 of the fourth insulating layer 54 is 16 mm, and thickness L5 of the fifth insulating layer 55 is 10 mm.

In the foregoing electrode assembly 100b, in the first direction Z, the second insulating layer 52 is entirely embedded into the first depression 121, the first insulating layer 51 is entirely accommodated in the second depression 122, the fourth insulating layer 54 and the fifth insulating layer 55 can protrude towards the thinned region 12a, the first depression 121 can eliminate influence of the second insulating layer 52 and the fifth insulating layer 55 on the flatness of the electrode assembly 100, and the second depression 122 can eliminate influence of the first insulating layer 51 and the fourth insulating layer 54 on the flatness of the electrode assembly 100. With third insulating layers 53, impedance of a cathode is increased, so as to reduce the risk of lithium precipitation caused by a significant thickness difference between portions of the first active material layer 12 on two ends of the second insulating layer 52 and an active material layer on a corresponding second electrode plate 30.

In addition, persons skilled in the art can also make other changes within the spirit of this application. Certainly, these changes made according to the spirit of this application shall fall within the scope of this application.

## Claims

1. An electrode assembly, wherein the electrode assembly comprises a first electrode plate, a separator, and a second electrode plate disposed in sequence; the electrode assembly further comprises a tab, a first insulating layer, and a second insulating layer; the first electrode plate comprises a first current collector and first active material layers applied on two sides of the first current collector in a first direction; the first direction is a thickness direction of the first current collector; the first active material layer is provided with a tab groove exposing the first current collector; and the tab groove is provided with a tab connected to the first current collector; wherein
at least one surface of the first active material layer is provided with a thinned region in communication with the tab groove, wherein the thinned region comprises a first depression apart from the tab groove in the first direction, and a second depression provided between the first depression and the tab groove; and a second direction is defined as a width direction of the first current collector, and when viewed in the second direction, a bottom wall of the second depression is divided into two first step surfaces apart from each other by the tab groove, and a bottom wall of the first depression is divided into two second step surfaces apart from each other by the second depression;
the first insulating layer is provided in the second depression, and two ends of the first insulating layer are respectively located on the two first step surfaces;
the second insulating layer is connected to a side of the second electrode plate facing the first depression, and a projection of the second insulating layer in the first direction is located in the first depression; and
in the first direction, relationships between depth T1 of the first depression, depth T2 of the second depression, thickness L1 of the first insulating layer, and thickness L2 of the second insulating layer satisfy T1≤L2, T2≥L1, T1≤5 µm, and 5 µm≤L2≤20 µm.

2. The electrode assembly according to claim 1, wherein 1 µm≤T1≤3 µm.

3. An electrode assembly, wherein the electrode assembly comprises a first electrode plate, a separator, and a second electrode plate disposed in sequence; the electrode assembly further comprises a tab, a first insulating layer, and a second insulating layer; the first electrode plate comprises a first current collector and first active material layers applied on two sides of the first current collector in a first direction; the first direction is a thickness direction of the first current collector; the first active material layer is provided with a tab groove exposing the first current collector; and the tab groove is provided with a tab connected to the first current collector; wherein
at least one surface of the first active material layer is provided with a thinned region in communication with the tab groove, wherein the thinned region comprises a first depression apart from the tab groove in the first direction, and a second depression provided between the first depression and the tab groove; and a second direction is defined as a width direction of the first current collector, and when viewed in the second direction, a bottom wall of the second depression is divided into two first step surfaces apart from each other by the tab groove, and a bottom wall of the first depression is divided into two second step surfaces apart from each other by the second depression;
the first insulating layer is provided in the second depression, and two ends of the first insulating layer are respectively located on the two first step surfaces;
the second insulating layer is connected to a side of the second electrode plate facing the first depression, and in the first direction, a projection of the second insulating layer in the first direction is located in the first depression; and
when viewed in the second direction, the first active material layer is further provided with flat coated regions located on two sides of the thinned region, and the electrode assembly further comprises two third insulating layers connected to two ends of the second insulating layer, a projection of each of the third insulating layers in the first direction extending from the first depression to the flat coated region.

4. The electrode assembly according to claim 3, wherein in the first direction, relationships between depth T1 of the first depression, depth T2 of the second depression, thickness L1 of the first insulating layer, and thickness L2 of the second insulating layer satisfy T1≥L2, T2≥L1, and T1>5 µm.

5. The electrode assembly according to claim 3, wherein the third insulating layer is formed by applying polyvinyl alcohol, polyacrylic acid, or a mixture of both onto the second electrode plate.

6. The electrode assembly according to claim 3, wherein in the first direction, thickness L3 of the third insulating layer satisfies 2 µm≤L3≤5 µm.

7. The electrode assembly according to claim 3, wherein a third direction is defined as a length direction of the first current collector, and in the third direction, length D3 of the third insulating layer satisfies 4 mm≤D3≤8 mm.

8. The electrode assembly according to claim 1 or 3, wherein a third direction is defined as a length direction of the first current collector, and in the third direction, relationships between length W1 of the first depression, length W2 of the second depression, length D1 of the first insulating layer, and length D2 of the second insulating layer satisfy W1≥D2, W2≥D1, W1>W2, and D2>D1.

9. The electrode assembly according to claim 1 or 3, wherein the first active material layer comprises a first surface and a second surface opposite each other in the first direction; the thinned region comprises a first thinned region and a second thinned region; the first thinned region is arranged on the first surface; the second thinned region is arranged on the second surface; and in the first direction, a projection of the first depression in the first thinned region overlaps with a projection of the first depression in the second thinned region, and a projection of the second depression in the first thinned region overlaps with a projection of the second depression in the second thinned region.

10. The electrode assembly according to claim 1 or 3, wherein the first current collector located in the tab groove is provided with a third depression recessed along the first direction, and the tab is accommodated in the third depression.

11. The electrode assembly according to claim 1 or 3, wherein the first active material layer comprises a first surface and a second surface opposite each other in the first direction, the first active material layer is provided with one thinned region, and the thinned region is arranged on one of the first surface and the second surface;
the electrode assembly further comprises a fourth insulating layer and a fifth insulating layer, wherein the fourth insulating layer is connected to the other one of the first surface and the second surface, the fourth insulating layer covers an end of the tab groove facing away from the thinned region, and the fifth insulating layer is connected to a side of the second electrode plate facing the fourth insulating layer; and
in the first direction, a projection of the first insulating layer overlaps with a projection of the fourth insulating layer, and a projection of the second insulating layer overlaps with a projection of the fifth insulating layer.

12. The electrode assembly according to claim 11, wherein in the first direction, relationships between depth T1 of the first depression, depth T2 of the second depression, thickness L1 of the first insulating layer, thickness L2 of the second insulating layer, thickness L4 of the fourth insulating layer, and thickness L5 of the fifth insulating layer satisfy L1+L4≤T2 and L2+L5≤T1.

13. A battery, wherein the battery comprises the electrode assembly according to any one of claims 1 to 12.

14. An electric device, wherein the electric device further comprises the battery according to claim 13.
